Europäisches Patentamt

European Patent Office

Office européen des brevets

(19)

(11) **EP 1 517 231 A1**

(12) **EUROPEAN PATENT APPLICATION**
published in accordance with Art. 158(3) EPC

(43) Date of publication:
**23.03.2005 Bulletin 2005/12**

(21) Application number: **03711808.0**

(22) Date of filing: **28.03.2003**

(51) Int Cl.⁷: **G06F 3/14**

(86) International application number:
**PCT/CN2003/000230**

(87) International publication number:
**WO 2003/083640 (09.10.2003 Gazette 2003/41)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **29.03.2002 CN 02103824**

(71) Applicant: **Enmedia System COPR.**
**Shangai 200030 (CN)**

(72) Inventors:
- **LU, Pingzhong**
  **Shanghai 200030 (CN)**
- **SUN, Haidong**
  **Shanghai 200030 (CN)**

(74) Representative: **Moir, Michael Christopher et al**
**Mathys & Squire**
**120 Holborn**
**London EC1N 2SQ (GB)**

(54) **EMBEDDED CURVE CHINESE CHARACTER LIBRARY DESCRIBED BASED ON STROKE CENTRAL LINE**

(57)     An embedded outline font library based on description of stroke centerline technology is a brand-new technology, which uses self-defined font data format to describe characters. The multi-font Chinese font generator product can be migrated to any computer operating system. Because the stroke is described based on the centerline, and stroke thickness parameter and curvature change parameter are introduced, the fonts are infinitely beautiful. Both font library and the revivification (generator) program take small storage. The process of revivification is very fast. The font generator integrated circuit (IC) product can be embedded into CPU to make the system directly to be Chinese localized without any additional cost. The IC product is especially suitable for embedded applications with very wide application prospect.

EP 1 517 231 A1

## Description

### Field of the Invention

This invention relates to data processing, especially to the data structure font library that could change the data to be processed into the data that the computer could process, this invention would be used in the Chinese character information processing by computer.

### Background of the Invention

The font library is the important one of the OS. Seeing as the number of the Chinese characters is big, the font library is the base of the processing of Chinese information on OS. Using the font library, the Chinese characters could be displayed and imported.

There are three conventional font library technologies including bitmap font, vector font and outline font.

The advantages of bitmap font are that making and displaying of the bitmap font is easily, but it also has its disadvantages; it couldn't be magnified or reduced. Besides when it was magnified the font capability would be square increased. If the bitmap font has several sizes, its capability is very huge. So that the bitmap fonts were used on the early OS or the embedded equipment having lower requests on the characters display.

The vector font library and the outline font library are popular on the OS at present, there are two types mostly, TrueType and Postscript. Now the most of PC Os use these two font libraries. The advantages are that these font technologies are mature, the font style is nice and it could be magnified and reduced. The disadvantages are that the structure of the font library is complex, the font revivification generator is complex, the effect of the small characters display is bad, the revivification speed of characters is slow, the capability of the font library is big and it could not meet the need of the embedded system. The font library technologies were both invented by America. We not only should pay much money, but also the development of our Chinese information processing would be baffled, it is abnormal that we are restricted on the Chinese characters font library technology area.

### Summary of the Invention

First of all, in the market there are no outline fonts that could meet the need of the embedded system, because the capability of the embedded system is small. It will increase the cost while increase the memory capability. One typeface GB18030 of TrueType font takes 20Mbyte storage space, and four typefaces take 80Mbyte in total. At the present the advanced embedded system usually has only 16Mbyte memory. The system itself cost some, the left is small and could not hold the huge outline Chinese font library. Many advanced PDAs and cell-phones could not be put in China market because they haven't been Chinese localized. As a result, they haven't found the way to meet the needs of the Chinese embedded system. So it is necessary to invent a new kind of font library technology, which has nice fonts at every size, the character could be magnified and reduced without restricted, the structure of the font library is legible, the font generator is used easily and the display speed is quick. Besides the font library capability is small so that it could meet the need of the embedded system.

Furthermore, we have to invent a new font that is defined by our own country. This new font library technology should have self-property font style generator, it could be the country standard and it could be the technology barrier when the foreign company put embedded products in my market. So then it could protect our embedded Chinese information area keeping the top station.

The invention is firstly realized on the Windows OS by using C language, then on the embedded OS UNLEUS and is solidified on the memory (testing). At last we all hope that it could be made into font library chip and font library explainer chip and solidified into the embedded CPU.

This font library is named as "Font library products based on the description of stroke centerlines". It will be called "Embedded ZGX outline font library" for convenience, i.e. the part "based on the description of stroke centerline" is replaced by "ZGX".

1. A font library based on the stroke centerlines, every stroke is divided into several segments according to its shape: head, body, corner and tail. There are several bodies and corners in one stroke, the segments are described in lines or Bezier curves. The key points of the segment are the control points of the segments. The relative locations of segments based on the control points describe the coordinates of the outline curve. The length of the stroke data is not equal to each other. The tail of the stroke ends the stroke.

The data format of the stroke library is that: the total amount of stroke takes two bytes;

The structure of the head of the stroke library is that: the length of the data is equal to the byte number of the total stroke number multiplying 4. Every stroke holds 4 bytes, the first 3 bytes are the location index of the stroke, the last 4 bits of the last byte describes the curvature change and the front 4 bits describes the number of the segment that could be curve changed.

The data of the stroke: the data of the stroke centerline and the outline curve data.

Different font style have different stroke library, usually there are 1000 strokes in the stroke library, the data length of the strokes from 20 bytes to 100 bytes.

2. A font library directly composed by strokes, the structure of data is:

the relative location of the stroke data holds 4 bytes;

the amount of all characters: 4 bytes;

the index of characters: the length of data is equal to the byte number of character number multiplying 4, and every character holds 4 bytes, the first byte describe the number of its strokes which make up of the character, the next 3 bytes describe the character location.

The parameter data: the length is equal to the number of 8 multiplying the strokes that make up of the characters, every stoke parameter holds 8 bytes, they are the number of the stroke (2bytes), the thickness (1 byte), location (2bytes), scaling coefficient (12bits) and curvature change increment (12bits);

the stroke library: as we have mentioned above in 1.

3. A component library composed by strokes, the data format is that:

The maximum amount of strokes contained in each component: takes 4 bytes, and usually ranges from 20 to 29, namely the maximum amount of the strokes contained in a component is from 20 to 29. The components are ordered by 1-stroke components, 2-stroke components, till 20~29-stroke components.

The index table of N-stroke components: holds 4*N bytes (suppose N is the maximum number of the strokes which make up of the components). Every location number of strokes components holds 4 bytes, that is: the location index of 2-stroke component, the location index of 3-stroke component and till to the location index of n-stroke component, the components which are made up by same amounts of strokes have some, from the number 1 to the maximum number, the components which are made up by 2-stroke hold 2*8 bytes, the components which are made up by 3-stroke hold 3*8 bytes, and so on.

The parameter data: 8 multiplying the number of the bytes which make up the component, every stroke parameter data hold 8 bytes, that is: the stroke number which holds 2 bytes, the thickness coefficient which hold 1 byte, the stroke location which holds 2 bytes, the stroke scaling coefficient which holds 12 bits and the stroke curvature change increment which holds 12 bits.

4. A font library composed by components, its data format is that:

version information: 4 bytes, the first 2 bytes is the name of corporation, the third byte is the symbol of the font style and the last byte is the symbol of the characters sets.

The start location of the character parameter: 4 bytes;

The start location of the component parameter: 4 bytes;

The start location of the stroke parameter: 4 bytes;

The character index data table: (total amount of characters+1)*4 bytes, the first 4 bytes is the total number, the next 4*n bytes is the index of every characters, the first 3 bytes is the character location, the last 1 byte is the component number which make up of the character.

The character parameter data is that: the component number make up of the character holds 6 bytes, they are that: the component number which holds 11 bits, the strokes number make up of the component holds 5 bits, the component location holds 2 bytes, the component scaling coefficient holds 12 bits and the thickness coefficient holds 6 bits;

The component parameter data: see 3;

The stroke library: see 1.

5. A font library of multi-font data-shared format, various font style libraries have the same component number and the same stroke number, and this part is described in one basic font, and is shared by other font library; its data structure is that:

The data format of basic font has been described in 4;

The other font data format is described as following:

The start location of the character parameter: 4 bytes;

The start location of the component parameter: 4 bytes;

The start location of the component parameter: 4 bytes;

The character index data table: 4*(n+1) bytes (n is the total amount of characters), the first 4 bytes denote the index of each character, later each 4 bytes denote the index of every character, where the front 3 bytes in every 4 bytes denote the character location, the last 1 byte denotes the amount of components contained in the character.

The character parameter data is that: the component number make up of the character holds 4 bytes, respectively the component location holding 2 bytes, the component scaling coefficient holding 12 bits and the thickness coefficient holding 4 bits;

The component parameter data: see 3, but without the stroke number; the stroke parameter data: see 1.

6. An explainer of strokes for ZGX font libraries (program module).
7. An explainer of stroke-composed characters for ZGX font libraries (interface application program module).
8. An explainer of components for ZGX font libraries (program module).
9. An explainer of component-composed characters for ZGX font libraries (interface application program module).
10. An explainer of multi-font data-shared characters for ZGX font libraries (interface application program module).

The advantages of this technology include: low memory cost while keeping the elegance appearance of characters. Usually, one-font standard GB18030 (includes 27590 Chinese characters and 1136 other characters, 28736 in all) will cost 1.1M bytes. Here Standard means every font has its own data file, has specialized parameters, components and strokes. This technology will only need one shared font-lib that takes 800k bytes. Various fonts could share the same data somehow, Song will take 800k, Fangsong, black and Kai only take 600k each and thus in all 2600k (2.6M). TTF will take more than 100M if 7 fonts are needed, in compare, only 4.5M will needed.

This technology is optimized, it could provide in focus characters. It only takes very few memories. It only takes 40k bytes for codes and thus enjoys a high speed. It uses standard C language to program. The Core module uses integers and could be links to various OS. It could change size automatically and add a function to amend the thickness of the strokes that could not be available so far. That would be a crucial advantage for those embedded systems. So it has wide usage.

**Brief Description of the Drawings**

Fig.1 is a flow chart of main module;
Fig.2 is a flow chart of reading in font lib data files;
Fig.3 shows a process of Changing from Standard code/UNICODE to ZGX;
Fig.4 is a flow chart of drawing strokes according to ZGX characters' numbers;
Fig.5 is a flow chart of Stroke generator;
Fig.6 shows a flow chart of Bezier lines generator module;
Fig.7 is a flow chart of generating a stroke by one or more Bezier line(s);
Fig.8 is a flow chart of generating a stroke by one or more Beeline(s);
Fig.9 is a flow chart of Beeline transfer sub-module;
Fig.10 is a flow chart of Beeline sub-module;
Fig.11 is Sub-module of drawing bitmaps in buffer;
Fig.12 is a flow chart of Fill-in sub-module;
Fig.13 is a flow chart of E table sub-module;
Fig.14 is a flow chart of CXBOTOOM sort ascending sub module;
Fig.15 shows file data format of parameterized strokes;
Fig.16 shows data format of parameterized strokes;
Fig.17 shows control word format of stroke centerline;
Fig.18 shows control word format of stroke outline;
Fig.19 shows file data format of components data;
Fig.20 shows data format of data file of stroke-composed characters;
Fig.21 shows data format of stroke structure parameters;
Fig.22 shows component-composed characters index;
Fig.23 shows character parameters data format of Component-composed characters;
Fig.24 shows component parameters data format of component-composed characters;
Fig.25 shows stroke parameters data format of component-composed characters;
Fig.26 shows character parameters data format of part shared component-composed characters;
Fig.27 shows component parameters data format of part shared component-composed characters;
Fig.28 shows stroke parameters data format of part shared component-composed characters;

Fig.29 shows a compute screen coordinate system;
Fig.30 shows a character coordinate system;
Fig.31 shows a character component coordinate system;
Fig.32 shows a stroke coordinate system.

**Detail Description of the Preferred Embodiments**

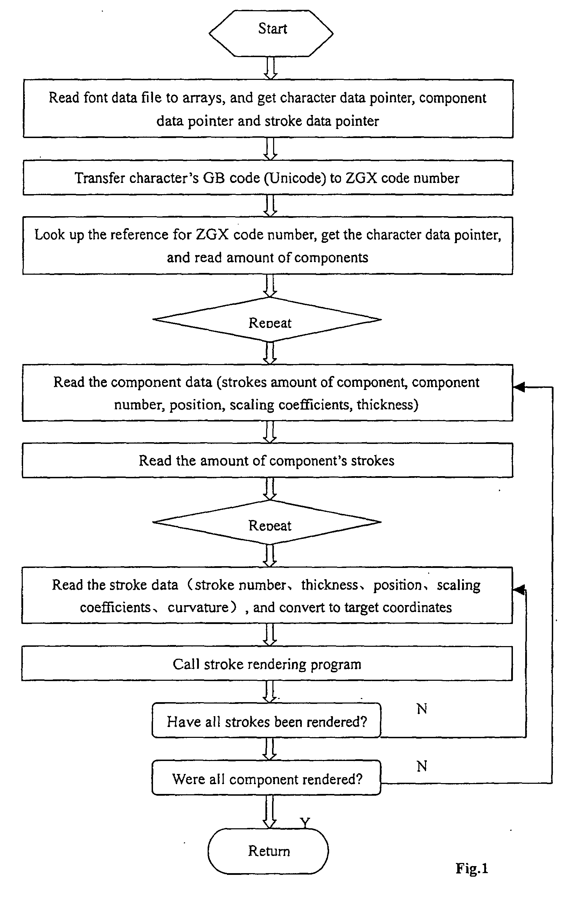

To illustrate the implementing process as showed in Fig. 1-32:

**1. Summary**

This technology is used for character information processing. It defines a particular curved outlines font lib data structure. This data structure includes strokes and components data and thus the best characters are generated with generator. It is characterized in that: the lowest memory cost while keeping its elegance. Usually, one-font standard GB18030 (includes 27590 Chinese characters and 1136 other characters, 28726 in all) will cost 1.1M bytes. Here Standard means every font has its own data file, has specialized parameters, components and strokes. This technology will only need one shared font-lib that takes 800k bytes. Various fonts could share the same data somehow, Song will take 800k, Fangsong, black and Kai only take 600k each and thus in all 2600k (2.6M). TTF will take more than 100M if 7 fonts are needed, in compare, only 4.5M will needed. That would be a crucial technology for embedded system, which has limited memory resources. So it has wide usage.
Terms used by ZGX are defined as following:

**1.1. Strokes of ZGX font libraries**

ZGX font lib strokes are the basic elements to form characters. Different strokes are represented by different stroke index. The strokes can be classified as Heng, Shu, Pie, Na, Dian that could be further divided to over 30 groups. In ZGX, over 1000 strokes shall be made. Strokes include centerlines, constructions and outlines. The outlines will form a closed curve.
The centerlines are skeletons of the character. It includes control dots for all strokes and consists of beelines and Bezier lines.
Strokes include head, body, inflexion and tail. Every part has control dots as reference to describe its outlines. Outlines consist of beelines and Bezier lines.
The stroke segments index indicates its formal index, from 0 to max.
The stroke curvature indicates that in the head or tail, some control dots' positions are changed. It has 15 modes from mode 1 to mode 15.
The curvature change segment number and the curvature change mode will be given in the index file of stroke library.

**1.2. ZGX font lib components**

ZGX font lib components are formed with some strokes. It could be classified as 1-stroke component, 2-stroke component, 3-stroke component... and the maximum is 31-stroke component. The components are represented by the amount of strokes of component (how many strokes the component has) and their own index number, and such data could be shared around variety-font products.
The strokes forming components have parameters of strokes number, thickness coefficient of stroke, center coordinates of stroke in x direction and y direction under component coordinate system, scaling coefficients of stroke in x direction and y direction and curvature diversification of stroke in x direction and y direction.
The stroke number could be shared in various font lib products as common data.
Coordinates for stroke center under component coordinate system are limited from -128 to 127. It is defined when customizing font lib products, and represented in one byte.
The thickness coefficient works on outlines of strokes, it will make strokes thick or thin. It could make effect on special section and decorates the fonts.
Scaling coefficient in x direction and y direction will only work on control points within centerlines. It will not change the thickness so that the consistency in the thickness of the stroke will be ensured. Scaling coefficient is defined when customizing font lib products, takes a value from 0 to 255 and be saved in one byte also. Wherein 128 denotes double zooming. In compact mode, it could be defined in 6 bits and thus has a limitation from 32-95, the saving format is that the number above described subtracts number 32, that is it is saved as 0 to 63. Whereas 64 denotes double zooming in compact mode.

Curvature diversification in x coordinate and y coordinate means changes in head, tail or some common section. It has 15 modes to work on a single section or 2 sections. (at most 2 sections.) For examples, x coordinates in head and y coordinates in tail is one mode, and x coordinates in common section and y coordinates in it is another mode. The premier will solve compound stroke (such as hengzhe) problem and the ratio problem of heng section and zhe section, and the latter one solve the problem that the same stroke in different component has different curvature diversification. This parameter will make ZGX fonts precisely same as any font templates, so that the precise and beautifulness of the character in font library will be ensured. Each curvature change increment is between -128 and 127, and is expressed with one byte. In the compact font format, the curvature change increment can be expressed with six bits format, because the curvature change increment is usually small.

### 1.3. Characters of ZGX font library

ZGX font library is expressed with numbers, which can be from 1 to N (N is a long integer), so the amount of the characters is no limited and the font library can be super large. ZGX font library can be ordered according to both Unicode standard and Chinese standard (such as GB2312, GBK and GB18030).

The character of ZGX font library can be formed by several components, also several strokes directly. The former is called component-composed character, while the later is called stroke-composed character.

Stroke-composed character means that the character is formed by several strokes, whose parameters data include: the number of each stroke composing the character, the thickness of each stroke, the coordinates of each stroke center in the character coordinate system, the scaling coefficients of each stroke in X direction and Y direction, and the curvature change increments of each stroke in X direction and Y direction. The explanation of each parameter of stroke-composed character is the same with the description of components of ZGX font library in section 1.2.

Component-composed character means that the character is formed by several components, whose parameters data include: the amount of strokes of each component (how many strokes the component has), the number of each component, the coordinates of each component center under the character coordinate system, the scaling coefficients of each component in X direction and Y direction, and the thickness coefficient of each component. Components are composed of strokes, as explained in section 1.2.

The amounts of each component's strokes (how many strokes the component has) and the numbers of the components are the data that can be shared in multi-font library products. It is only needed to be in the font file of one typeface.

The coordinates of each component center under the character coordinate system are decided according to the structure position number. There are 31 kinds of structure position numbers, such as left-right structure, up-down structure, surround structure etc., which are determined when font library product is customized.

The scaling coefficients of component in X and Y directions are limited between 0 and 255, and each is expressed by one byte. In compact format, 0 to 63 represents 32 to 95 respectively. Each scaling coefficient is expressed by six bits, and the scaling coefficient "64" means double.

### 1.4. Extern called parameters for generating character

When a character is generated in the device coordinate system, the parameters used are font number of the character, Chinese standard code (or Unicode standard) of the character, length of the character (unit: pixel), width of the character (unit: pixel), thickness coefficient of the character, foreground color of the character, display mode of the character (such as rotation, bold, oblique, fill etc.), and the bitmap data of the character returning from the buffer.

In principle, the extern called parameters has no limit on the length, width and thickness of the character. This means that one kind of typeface can be any length, width and thickness, so the character can be long or short, bold or thin, also one typeface character may be used as many kinds of typefaces.

### 1.5. Technical specification of ZGX font library

Under the premise of ensuring preciseness and beauty of characters, ZGX characters can save memory and accelerate the display speed mostly.

The standard format GB18030 font library (27590 Chinese characters and 1136 non-Chinese characters, 28726 codes together) of one font is 1.1MByte (while TrueType font library is over 15Mbyte). The compact format GB18030 font library of Songti typeface is 800KByte, and the compact format GB18030 font library of Fangsong, Heiti, Kaiti typeface is respectively 600Kbyte. Compact format GB18030 font library of four typefaces is 2.6MByte together, and font library of seven typefaces is 4.5MByte together.

The revivification algorithm of ZGX font library is more excellent than that of TrueType font library, because the filling process of the former is aimed at each stroke while not the whole character, so the filling speed of ZGX is faster. Additionally, the index of ZGX is simple and direct, and all the math operations are integer operation with overall optimization.

## 2. Data format of ZGX font library

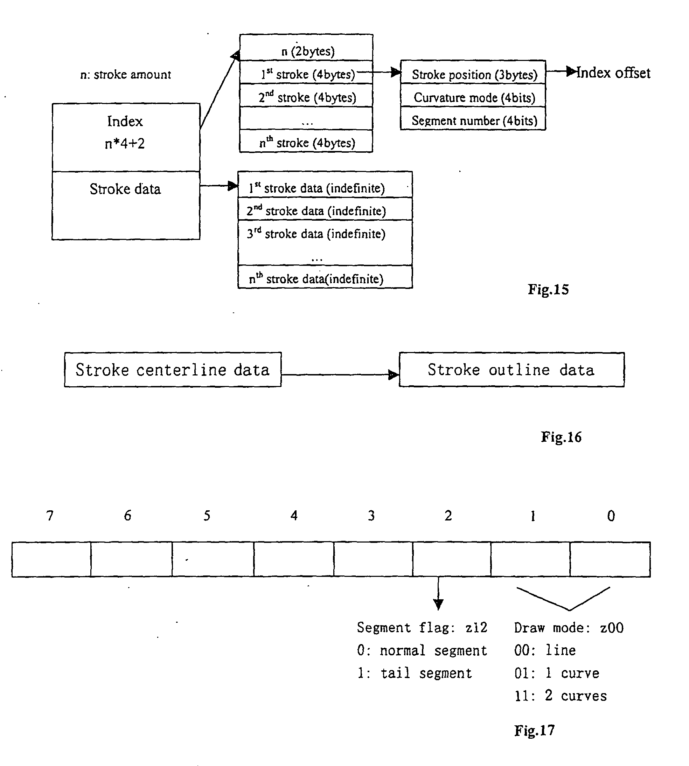

### 2.1. Data file of strokes (see Fig. 15)

Data file format of strokes (see Fig. 16).

The data format of control word for each stroke centerline segment is represented in one byte. The definition of every bit of the control word is in Fig.17.

Data of the stroke centerline segments include: head coordinates (2Byte), control word of segment (1Byte), body data (2*z00Byte), and tail control word.

Data of the stroke outline segments include:

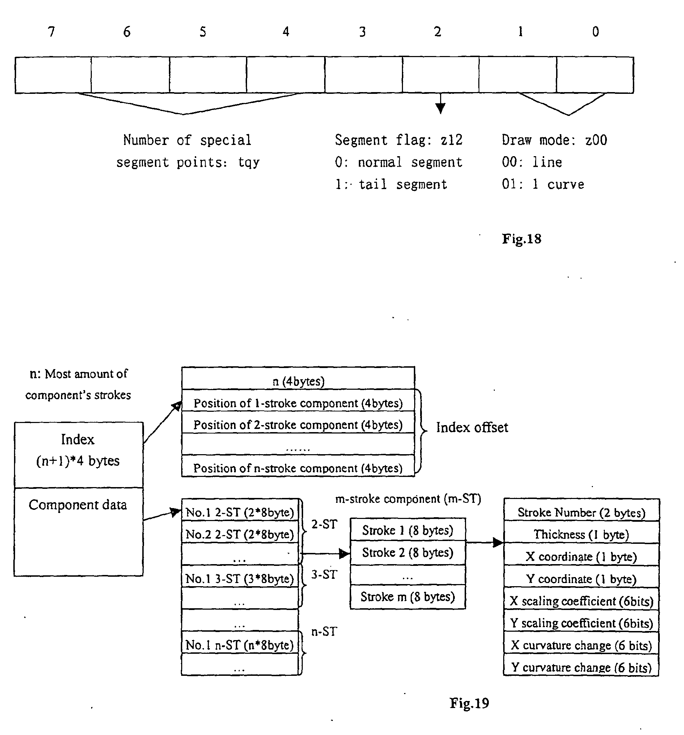

Control data format of each segment is represented in 1 Byte, the definition of every bit of the word is explained below (see Fig.18).

Data format of stroke outline segment: segment control word (1 Byte), coordinates increment of $1^{st}$ edge outline(2 Byte), coordinates increment of $2^{nd}$ edge outline(2 Byte), other points coordinates of the head ($2 \times tqy$ Byte), body data ($4 \times z00$ Byte, including points on $1^{st}$ and $2^{nd}$ edge outlines); corner control word (1Byte), $1^{st}$ outline coordinates increment (2Byte), $2^{nd}$ outline coordinates increment (2Byte), other points coordinates of the corner ($2 \times tqy$ Byte), body data ($4 \times z00$ Byte, including coordinates of points on $1^{st}$ and $2^{nd}$ outlines); tail control word, other points coordinates of the tail ($2 \times tqy$ Byte).

### 2.2. Data file of components

Please see Fig.19.

### 2.3. Data file of Stroke-composed characters

The first four-byte denotes the start position of stroke data.

The second four-byte denote the amount of Chinese characters.

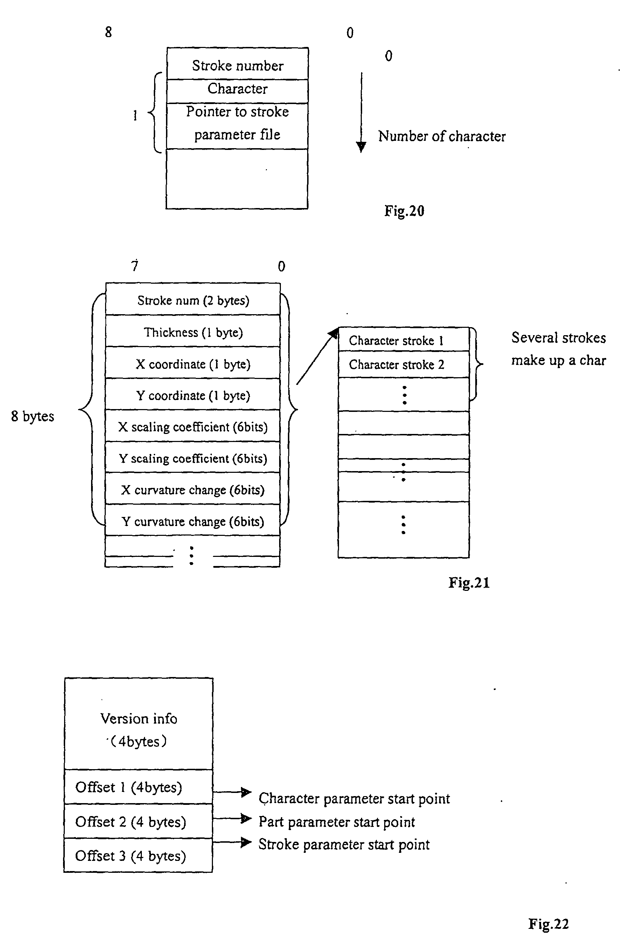

Then, the index data of every Chinese character takes four bytes orderly, where the first byte is the stroke amount of the character, and the rest three bytes denote the position of the stroke data in the stroke parameter file (see Fig.20).

The length of this data block is 4*amount of characters.

The following data block is the stroke structure parameters: every stroke takes 8 bytes, where the first two bytes denote the stroke number, the third byte denotes the thickness of stroke, the later five bytes are the X, Y, SX, SY, QX, QY of the stroke (see Fig.21).

The storage of the data block is: amount of all Chinese characters' strokes*8 bytes;

Next is the stroke generating data block. It is composed of:

The amount of strokes: 2 bytes;
The index of stroke data: 4*amount of strokes, stroke data (Fig.15 is the compact format of stroke data file).

### 2.4. Data file of Component-composed characters

Basic font file is mainly composed of several parts: index table, character parameter data, component parameter data and stroke data.

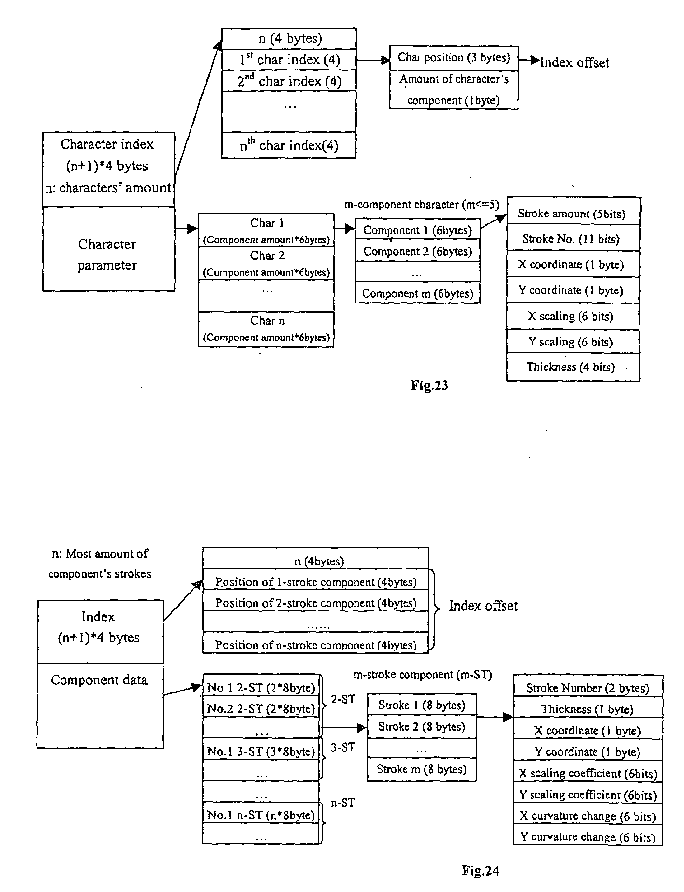

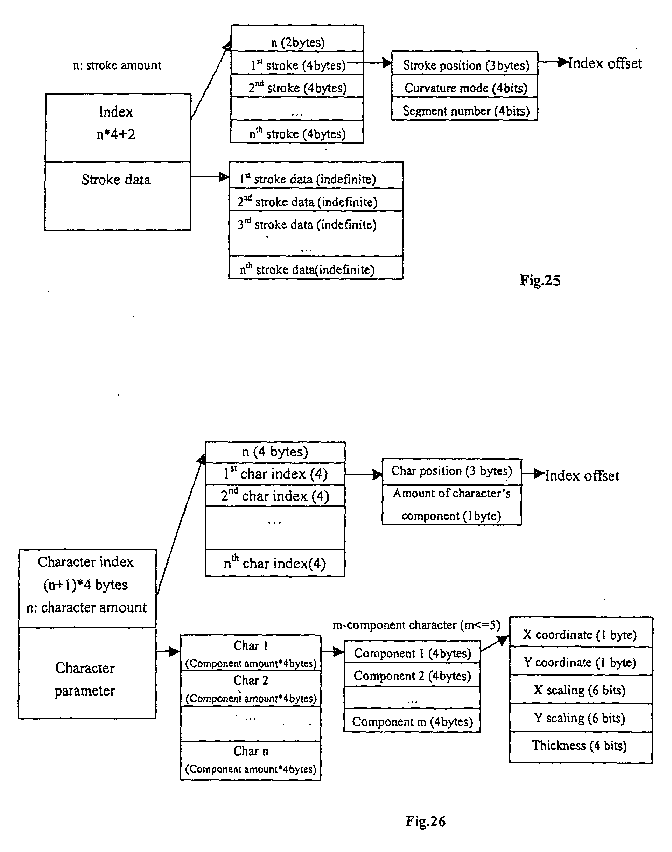

Index table (see Fig.22)
Character parameter data (see Fig.23)
Component parameter data (see Fig.24)
Stroke data (see Fig.25)

### 2.5. Format of part shared multi-font component-composed characters

Other font files are mainly composed of index table, character parameter data, component parameter data, and stroke data. The data formats in detail are described as following:

**EP 1 517 231 A1**

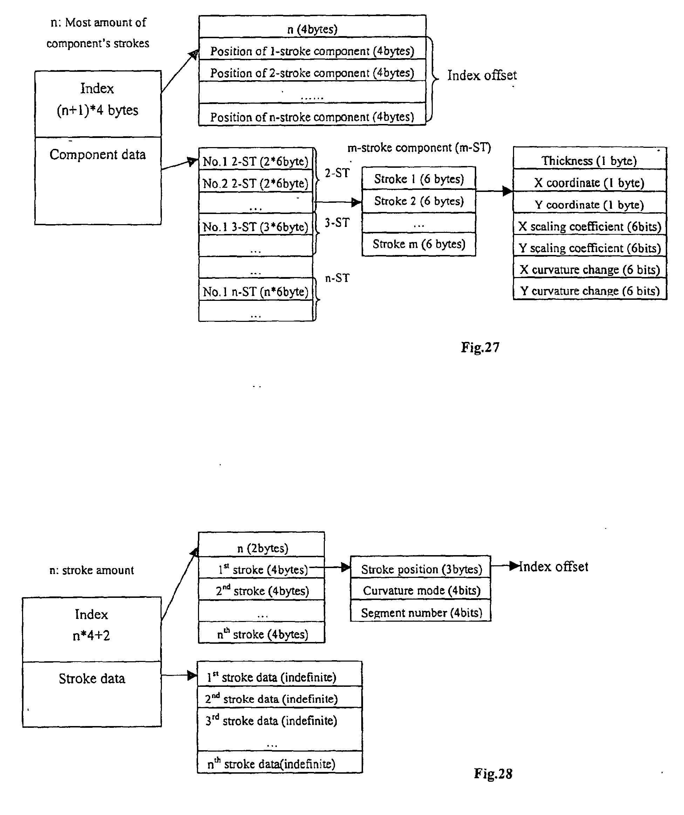

Index table (see Fig.22)
Character parameter data (see Fig.26)
Component parameter data (see Fig.27)
Stroke data (see Fig.28)

### 3. The mathematical model and its font generator device

### 3.1. Coordinate system

ZGX font library uses following coordinate systems: device coordinate system (relative to printer or other devices), character coordinate system, component coordinate system and stroke coordinate system.

### (1) Device coordinate system

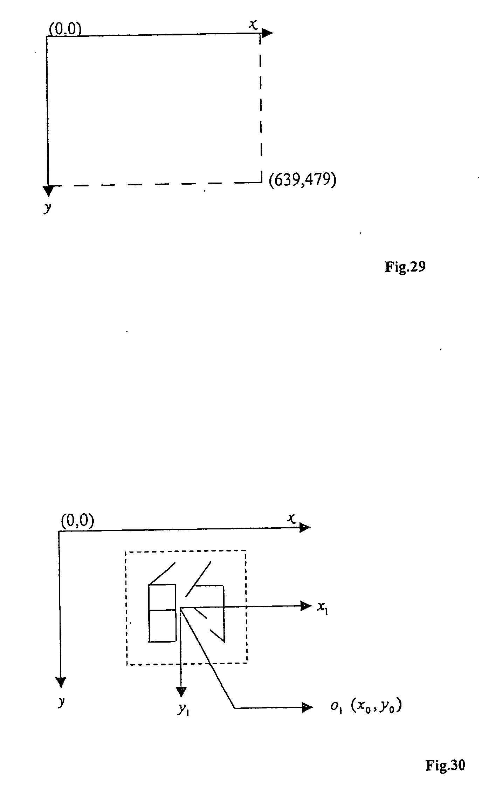

Take computer's monitor as an example, the definition of the screen is as Fig.29.
The origin of the screen is (0,0) at the top left corner. The Y-axis is down, and the X-axis is rightward. The resolution of VGA is 640*480, so the coordinates of the bottom right corner is (639,479).

### (2) Character coordinate system

In Fig.30, $x_1o_1y_1$ is the coordinate system, and $xoy$ is the device coordinate system. The center of the character is in the device coordinate system.
To display a character, the following data are needed: the number of the character, the scaling coefficients in X direction and Y direction (the resolution of the reference character is 256*256) and the coordinates of the character's center $o_1(x_0,y_0)$ (this point is the origin $o_1$ of the character coordinate system's center). Then the character can be displayed right in the given position.

### (3) Component coordinate system

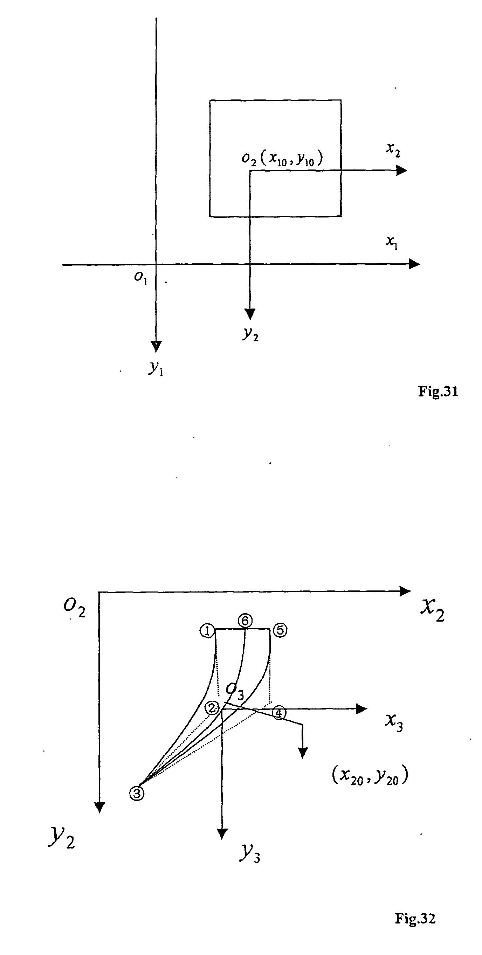

In Fig. 31, $x_2o_2y_2$ is the component coordinate system, relative to character coordinate system. And $o_2$ is the center of a component. Every component has a component coordinate system relative to character coordinate system. Displaying a character is realized by displaying several components. To display a character, it is needed to read the number of each component, the scaling coefficients in X and Y directions, and the relative coordinates $(x_{10},y_{10})$ of $o_2$.

### (4) Stroke coordinate system

In Fig.32, $x_3o_3y_3$ is the stroke coordinate system, relative to component coordinate system $x_2oy_2$. Generating a component is realized by displaying several strokes. To generate a component, it is needed to read number of each stroke, the scaling coefficients in X and Y directions, and the relative coordinates $(x_{20},y_{20})$ of $o_3$ in $x_2o_2y_2$ coordinate system. Also, every stroke has a stroke coordinate system.
How to generate a stroke? In the stroke coordinate system, the stroke is gained by filling algorithm according to the stroke's coordinates and curve fitting parameters (read from stroke file according to the number of the stroke).

### (5) Fitting of second-order Bezier curve

As shown in Fig.32, the short Pie is divided into three segments, and every segment uses a fitting of second-order Bezier curve.
The first segment uses the coordinates of ① , ② , and ③ . The ② is the point of intersection of the tangents of ① and ③ .
The second segment uses the coordinates of ③ , ④ , and ⑤ . The ④ is the point of intersection of the tangents of ③ and ⑤ .
The third segment uses the coordinates of ⑤ , ⑥ , and ① . The ⑥ is the point of intersection of the tangents of ⑤ and ① .
If curve from ① to ③ is a line, than ② can be any point on the line. The formula is as following:

$$\begin{cases} x(t) = x_1(1-t^2) + 2t(1-t)x_2 + t^2 x_3 \text{ ------------(1)} \\ y(t) = y_1(1-t^2) + 2t(1-t)y_2 + t^2 y_3 \text{ -----------(2)} \end{cases} \quad wherein, t \in [0,1]$$

In the formula, $(x_1,y_1)$, $(x_2,y_2)$ and $(x_3y_3)$ are respective the coordinates of the head point, the middle point and the end point.

Thus, it is only needed to save the relative coordinates of ① to ⑥ points for Bezier curve fitting. The data format is the same as that of broken line, but the difference is the record of coordinates of even points. And the point is the intersection of the tangents of ore-and-aft two points. During filling calculation, various of methods are adopted.

**(6) Coordinates transform of generating a character in device**

The transform formulas for coordinate points on every stroke of every component from character coordinate system to device coordinate system are:

$$X_{kij} = ((X_{2i} + S_{xBi} \times X_{3j} \div 128) \times B_{xk} \div 128 + X_{k_1}) \times Z_{xs} \div 128 + X_0$$

$$Y_{kij} = ((Y_{2i} + S_{yBi} \times Y_{3j} \div 128) \times B_{yk} \div 128 + Y_{k_1}) \times Z_{ys} \div 128 + Y_0$$

Where,

$(X_{kij}, Y_{kij})$ denotes coordinates of the i$^{th}$ stroke in the character coordinate system;
$(Z_{xs}, Z_{ys})$ denotes scaling coefficients of the character;
$(X_0, Y_0)$ denotes character's coordinates in the screen coordinate system;
$(X_{3j}, Y_{3j})$ denotes the i$^{th}$ stroke's coordinates in the stroke coordinate system;
$(X_{k1}, Y_{k1})$ denotes coordinates of the k$^{th}$ component's center in the character coordinate system;
$(B_{xk}, B_{yk})$ denotes scaling coefficients of the k$^{th}$ component's center in X and Y directions;
$(X_{2i}, Y_{2i})$ denotes coordinates of the k$^{th}$ component's i$^{th}$ stroke's center in the character coordinate system;
$(S_{xBi}, S_{yBi})$ denotes scaling coefficients of the k$^{th}$ component's i$^{th}$ stroke in X and Y directions;
k=1 ----- the amount of components of the character;
i=1 ----- the amount of strokes of the k$^{th}$ component;
j=1 ----- the amount of points of the k$^{th}$ component's i$^{th}$ stroke;

**3.2. ZGX font generator device**

The program flow charts are shown as following:

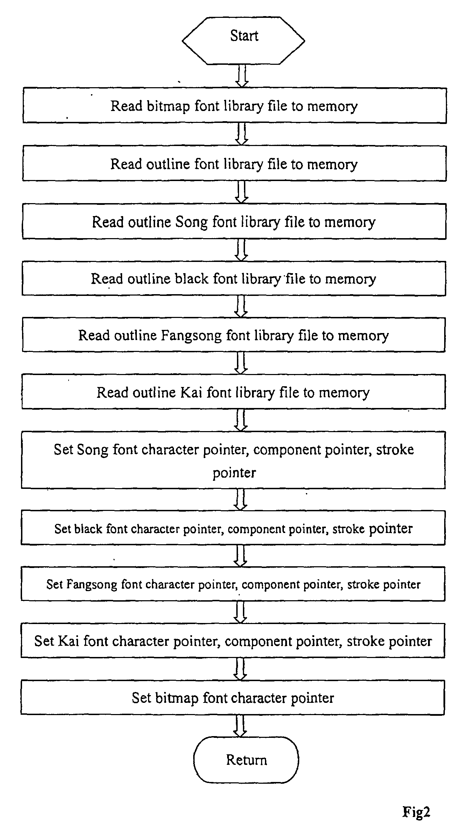

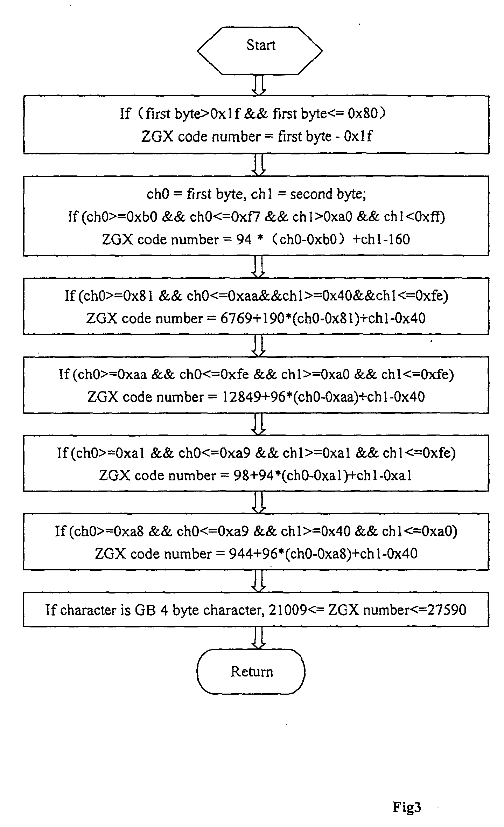

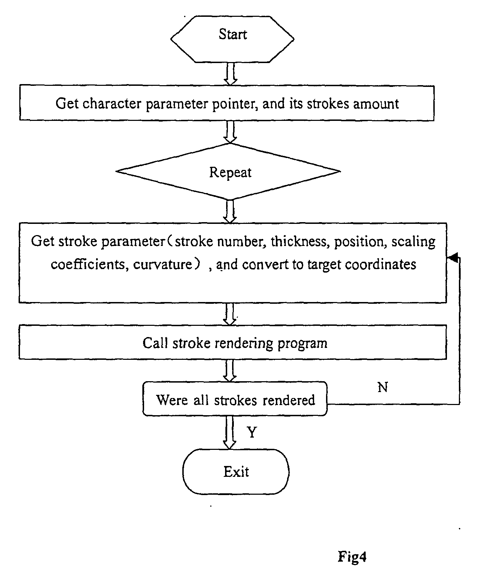

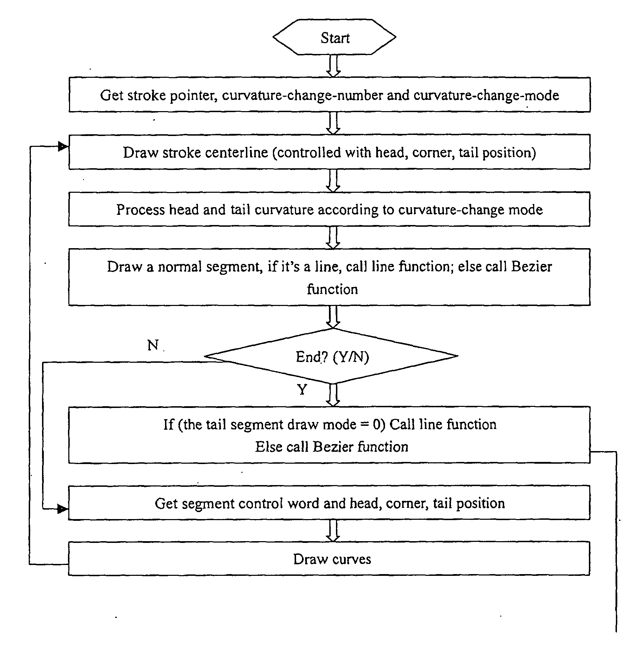

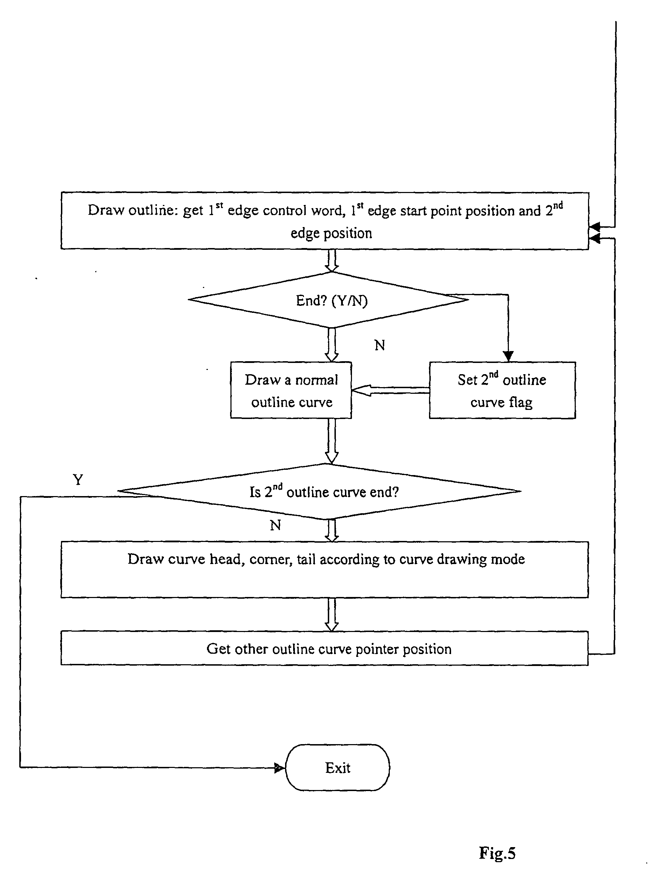

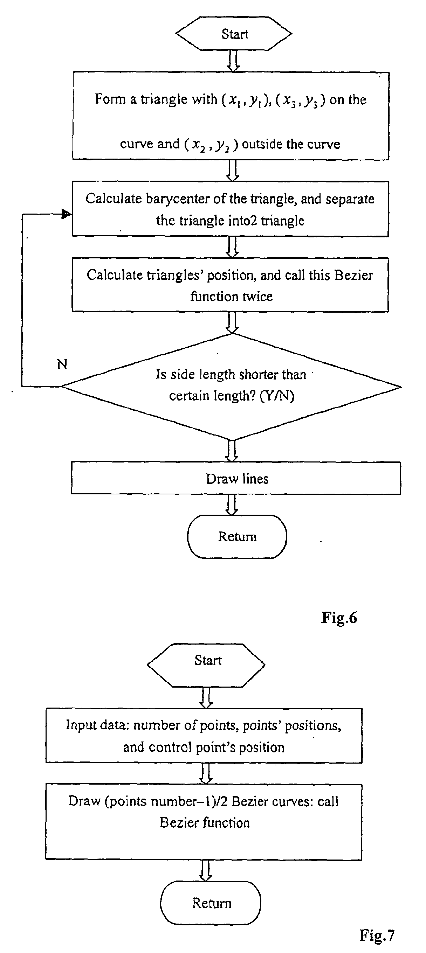

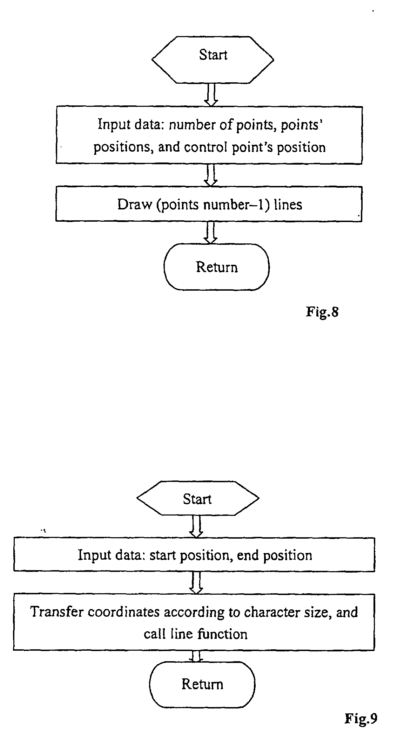

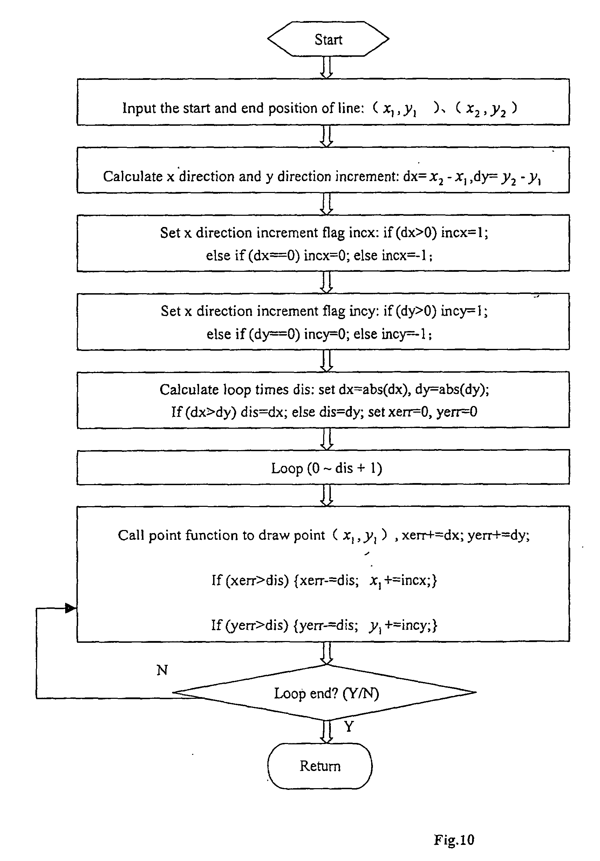

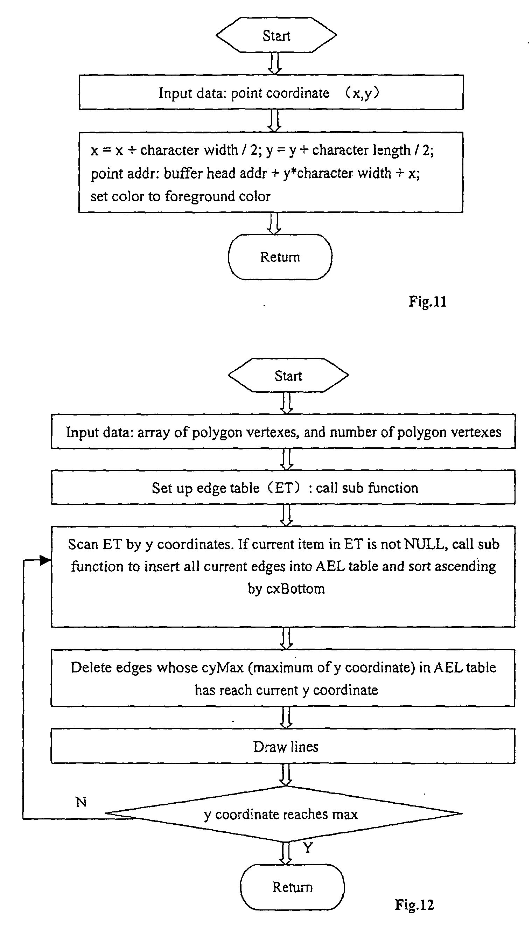

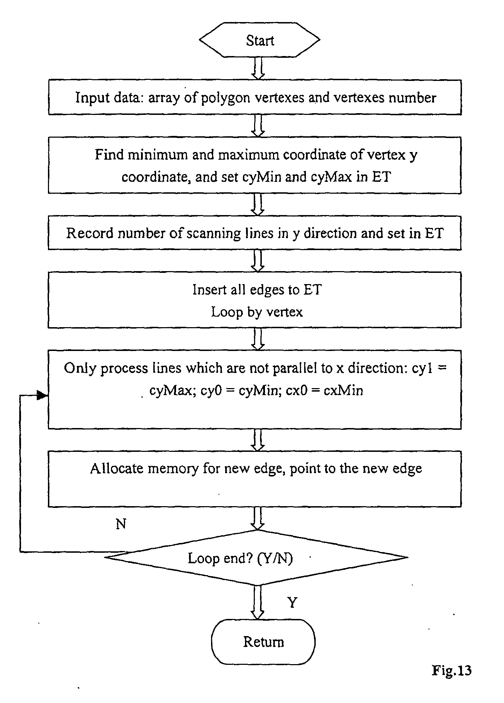

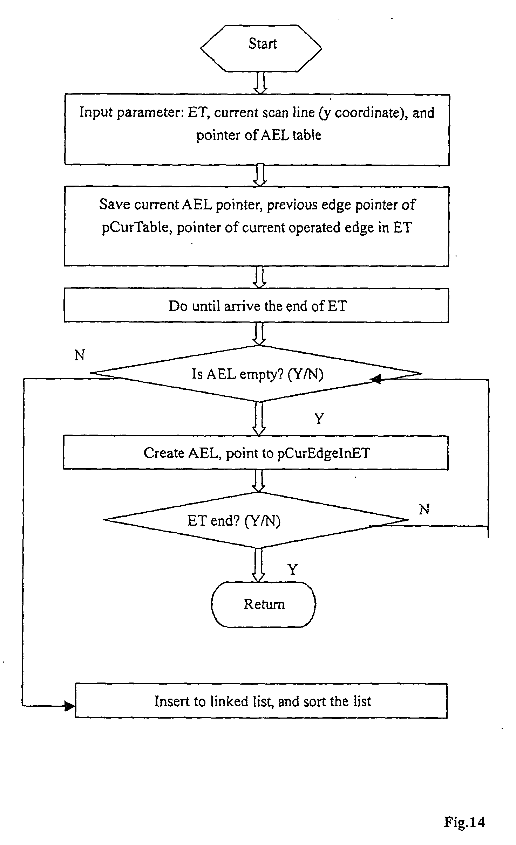

(1) The flow chart of main module is shown in Fig.1.
(2) The process of reading font library data into memory array is shown in Fig.2.
(3) The process of transforming Chinese Standard code (or Unicode code) into character number of ZGX font library is shown in Fig.3.
(4) The process of generating Stroke-composed character according to the character number of ZGX font library is shown in Fig.4.
(5) The process of generating Component-composed character according to the character number of ZGX font library is shown in Fig.1.
(6) The flow chart of stroke generator is shown in Fig.5.
(7) Recursive call module of Bezier curve is shown in Fig.6.
(8) The sub-module of generating a stroke segment with one Bezier curve or more is shown in Fig.7.
(9) The sub-module of generating a stroke segment with one line or more is shown in Fig.8.
(10) The sub-module of transforming line is shown in Fig.9.
(11) The sub-module of drawing line is shown in Fig. 10.
(12) The sub-module of drawing bitmap in buffer is shown in Fig.11.
(13) The sub-module of filling algorithm is shown in Fig.12.
(14) The sub-module of edge table (ET) of edges is shown in Fig.13.
(15) Inserting all edges of one item from ET of edges into active edge table (AEL) in ascending order by cxBottom is shown in Fig.14.

**4. ZGX font library call interface device**

**4.1. Data structure definition**

**(1) Return pointer array of font initialization**

```
typedef struct fhzz
{
long * zys;
long * zics;
long * zrcs;
long * bhcs;
}fhzz,far * lpfhzz;
```

zys: data pointer of character index parameter;
zics: data pointer of character parameter for font;
zrcs: data pointer of component parameter for font;
zhcs: data pointer of stroke parameter for font.

**(2) Revivification array of (Chinese) character**

```
typedef struct hzfycs
{
unsigned char zhd;
unsigned char zkd;
unsigned char zcd;
unsigned char zys;
unsigned char zfs;
}hzfycs,far * lphzfycs;
```

zhd: the thickness parameter of Chinese character, 1 Byte, its standard value is 32;
zkd: the width parameter of Chinese character, 1 Byte, using pixel as unit;
zcd: the length parameter of Chinese character, 1 Byte, using pixel as unit;
zys: the color or grayscale of Chinese character, 1 Byte;
zfs: the display mode parameter of Chinese character, 1 Byte.

The definition of parameter value is as following:

The first two bits denote the rotation mode: 00 means the routine (no rotation), 01 means 90 degree rotation, 10 means 180 degree rotation, 11 means 270 degree rotation.

The third bit denotes the bold or not: 0 means routine, 1 means bold.

The fourth bit denotes the italic or not: 0 means routine, 1 means italic.

The fifth bit denotes that it is underlined or not: 0 means routine, 1 means underline.

The sixth and seventh bits denote the filling mode of Chinese character: 00 means only drawing centerline i. e. single line character, 01 means filling Chinese character by 'OR' mode, 10 means filling Chinese character by 'AND' mode, 11 means filling Chinese character by 'XOR' mode.

The eighth bit denotes the display mode of character: 0 means DBC case, 1 means SBC case, 1 means Chinese character.

**4.2. Initialization of font**

**(1) Interface module**

```
HZ_S (zth, lpfhzz) ;
```

zth: font size, character parameter, these are entrance parameters;
The definitions of parameters are as following:

    0: 16*16 bitmap font library according to GB-2312 standard;
    1: Outline font library of Songti (Chinese) font according to GB18030-2000 standard;
    2: Outline font library of Heiti (Chinese) font according to GB18030-2000 standard;
    3: Outline font library of Fangsongti (Chinese) font according to GB18030-2000 standard;
    4: Outline font library of Kaiti (Chinese) font according to GB18030-2000 standard;
    5: Outline font library of special characters according to GB18030-2000 standard;
    6:...
    Lpfhzz: return parameter, pointer of pointer array.

**(2) Realization method**

Open file according to the size of font, for example, the name of GB2312 16*16 font library file is DW16D, the name of GB18030-2000 Songti outline font library file is DWSTQ, the name of GB2312 Heiti outline font library file is DWHTQ, and the name of special character font library file is DWQZFK.

Twelve memory array are defined respectively as GB2312 16*16 bitmap font array, index parameter array of GB18030-2000 Songti outline font library, character parameter array of Songti font, Songti component parameter array and Songti stroke parameter array; character index parameter array of Heiti outline font library, character parameter array of Heiti font, Heiti component parameter array and Heiti stroke parameter array; parameter arrays of Fangsong, Kaiti, and special character etc.

Read file data according to the font into corresponding array;

Return the pointer of each array.

**4.3. Revivification of Chinese characters**

**(1) Interface module**

    HZ_X(hz$,zth,hzfycs,fclx,zbuf);
    Hzh: size of font;
    hz$: the Chinese standard code of a Chinese character, usually 2 bytes;
    hzfycs: the revivification parameter array of Chinese character, 5 bytes;
    Fclx: the type of a return parameter, 0 denotes bitmap, 1 denotes outline or vector array, 2 denotes TTF data format, 3 denotes PS data format;
    Zbuf: bitmap of returned Chinese character or other data buffer pointer; this is a returned parameter.

The storage mode of Chinese character bitmap is that every pixel takes 1 bit, every character takes [((zkd*zcd)+7)/8] bytes.

**(2) Realization method**

    Find the corresponding array pointer according to the size of font;
    Calculate the size of Chinese characters according to the inner code. The formula for calculation is as following:

    Suppose the higher byte of the inner code is C1, and the lower byte is C2 (C1, C2 are the integer with no sign). If C1=0, then go to DBC case process.
    If hz$ is in the range of character code, i.e. the Chinese standard code is between 0X1F and 0X80, A1A1-A1Fe and A9A1-A9FE, A840-A87E and A880=A8FE and A940-A97E and A980-A9FE (total amount is 1136), the character font library DWQZFK will be called. Outline font library uses two steps to generate Stroke-composed characters. The module of stroke revivification needn't to be modified. It is only needed to modify the called outline font library file, process the structure file of the character, and calculate the order number ZH of the character in the font library according to the code:

```
if(hz$>=0x1f && hz$<=0x80) ZH=hz$-0x1f;

else if(c0>=0xa1 && c0<=0xa9 && c1>=0xa1 && c1<=0xfe)

ZH=99+(c0-0xa1)*94+c1-0xa1;

else if(c0>=0xa8 && c0<=0xa9 && c1>=0x40 && c1<=0xa0)

{

ZH=945+(c0-0xa8)*96+c1-0x40;

if(c1>0x7f) ZH--;

}
```

Else go to the corresponding font file for Chinese font library, and do the following process:

If C1>=0XB0 and C1<=0XF7 and C2>=0XA1, then character number =(C1-176)*94+C2-161;
If C1>=0X81 and C2<=0XA1: if C2>=0X7F, then C2--, character number =(C1-176)*94+C2-64+6768;
If C1>=0XAA and C2<=0XA1: if C2>=0X7F, then C2--, character number =(C1-170)*96+C2-64+12848;

The number of four-byte character is between 21008 and 27589.
The data describing the character are found according to the character number;
If the character is a 16*16 bitmap font character, then the data pointer of the character is: bitmap font data pointer +(character number-1)*32;
If the character is an outline font character, then its character parameter data will be found according to character index file and character number, then the component parameter data will be found according to the character parameter data, and finally the stroke data will be found according to each component parameter data.
The coordinates of each stroke are calculated.
The drawing stroke sub-module is called.
The drawing stroke sub-module calls drawing line sub-module and drawing Bezier curve sub-module. In the end, the filling module is called.
Additionally, there are rotation, bold, underline, and italic modules.

### (3) Design

An interface module, a drawing stroke sub-module, a drawing line sub-module, a drawing Bezier curve module and a filling sub-module are required by design.
The stroke drawing line sub-module and the filling sub-module need to be realized in buffer.
The calculating of the character drawing control is on the 256*256 rectangle. It is scaled when drawing centerline and outline (firstly, both the length and width of the character are 256; when drawing centerline and outline of the stroke, the following calculating is applied: X coordinate relative to the character's center*character's width/256, Y coordinate relative to the character's center*character's length /256).
Return the bitmap, vector outline, TTF format or PS format of the character.
Fault tolerance: All characters can be displayed at any resolution without error, distortion and beyond the limits.

### 4.4. Display of character string

### (1) Interface module

```
HZ_C(hzc$,zth,zxx,zyy,hzfycs);
Hzh: size of font;
```

hzc$: the code string of a Chinese character or a set of characters;

Zxx: the X coordinate of the displaying character string in the top left corner;
Zyy: the Y coordinate of the displaying character string in the top left corner;
hzfycs: the revivification parameter array of characters, 5 bytes.

**Claims**

1. An embedded ZGX outline font library, **characterized in that**:

1) a stroke library based on stroke centerline description, each stroke is divided into several stroke segments according to its shape, which are head, body, corner and tail, the body and the corner can be several segments, in the stroke coordinate system, firstly the segments of stroke centerline are described by the coordinates of feature points on lines or Bezier curves; then the control points of each segment are the key points of stroke centerline; the outline curve is described then by the position relative to the reference of control points of each segment; the stroke data aren't equal to each other; the end of the stroke is signed by data bit of the tail;
the stroke library includes:

the amount of strokes contained in the font, which takes 2 bytes;
the head data of strokes, which takes amount of stroke*4 bytes, each stroke takes 4 bytes, where the first three-byte denotes the pointer of stroke data position, and the last byte denotes curvature change mode (4 bits) of the stroke and the number of segment (4 bits);
the stoke data, which include data of stroke centerline segments, outline data of stroke segments;
the amount of strokes for different fonts are different from each other, generally about 1000, each stroke data takes 20-100 bytes;

2) a Chinese font library composed directly by strokes, its data formats include:

the start position of stroke library relative to the head of font library, which takes 4 bytes;
the total amount of Chinese characters contained in the font library, which takes 4 bytes;
the index table of Chinese characters, which takes 4*amount of characters, each character takes 4 bytes, where the first byte denotes the amount of strokes for one character, and the later 3 bytes is the position pointer of a character's each stroke;
the parameter data of every Chinese character include: 8*amount of the character's strokes; every stroke parameters data take 8 bytes, respectively are stroke number taking 2 bytes, thickness coefficient taking 1 byte, stroke position taking 2 bytes, stroke scaling coefficients taking 12 bits and stroke curvature change increments taking 12 bits;
stroke library, whose data format is as same as that of the stroke library described in 1);

3) a Chinese component library composed by strokes, its data format includes:

the largest amount of components' strokes contained in the component library takes 4 bytes, and usually is 20-29, that is, a component comprises 20-29 strokes, the components are ordered by 1-stroke components, 2-stroke components, till 20~29-stroke components;
the index table of N-stroke component: the largest amount of strokes is supposed to be N, the component data composed by strokes takes 4*N bytes, the position of each category component takes 4 bytes, which are ordered by 1-stroke component position, 2-stroke component position, till N-stroke component position, if there are several components composed by certain amount of strokes, those components are ordered from No.1 to the amount of this kind of components, each 2-stroke component data takes 2*8 bytes, each 3-stroke component data takes 3*8 bytes, and so on;
component parameter data take 8*amount of the component's strokes bytes, each stroke parameters data take 8 bytes, respectively are each stroke number taking 2 bytes, thickness coefficient taking 1 bytes, stroke's position taking 2 bytes, scaling coefficients taking 12 bits, and curvature change increment taking 12 bits;

4) a Chinese font library composed by components, its data formats include:

version information, which takes 4 bytes, the first 2 bytes is the name of corporation, the third byte is the symbol of the font style and the last byte is the symbol of the characters sets;

the start position of character parameter field, which takes 4 bytes;
the start position of component parameter field, which takes 4 bytes;
the start position of stroke data field, which takes 4 bytes;
character index data table includes: 4*the total amount of characters bytes; the first 4 bytes is the total amount of characters, and then each 4 bytes denote the index of each character, where the first 3 bytes denote the position of character parameter data, and the last 1 byte is the amount of components;
character parameter data: the description of parameters for each component takes 6 bytes, that is, component number taking 11 bits, the amount of strokes contained in the component taking 5 bits, component position taking 2 bytes, component scaling coefficients taking 12 bits and component thickness coefficient taking 6 bits;
the component parameters data: see 3); stroke library: see 1);

5) a compact shared format of multi-font library, the number of one component of all kinds of fonts is the same, which needs to be described in only one font, while other font can share this part of data, the data format is described as following:

the basic font format, that has been described in section 1.4;
other font data format is:

the start position of character parameter area: 4 bytes;
the start position of component parameter area: 4 bytes;
the start position of stroke parameter area: 4 bytes;
character index data table: 4*(1+amount of characters) bytes; the first 4 bytes is the total amount of characters; later, every 4 bytes is the index of every character, where the first 3 bytes is the character parameter data position and the last byte is the component amount of the character;
character parameter data: the parameter describing a character's every component takes 4 bytes, that is, component position taking 2 bytes, component scaling coefficients taking 12 bits and component thickness coefficient taking 6 bits;
component parameter data: see 3), but without stroke number; stroke library: see 1);

6) a revivification explainer for strokes of outline font libraries based on stroke centerline;
7) a revivification explainer for stroke-composed characters of outline font libraries based on stroke centerline;
8) a revivification explainer for stroke-composed components of outline font libraries based on stroke centerline;
9) a revivification explainer for component-composed characters of outline font libraries based on stroke centerline;
10) a revivification explainer for multi-font part data-shared characters of outline font libraries based on stroke centerline.

```
                        ┌──────────────┐
                        │    Start     │
                        └──────────────┘
                               ║
   ┌───────────────────────────────────────────────────────────┐
   │ Read font data file to arrays, and get character data      │
   │ pointer, component data pointer and stroke data pointer     │
   └───────────────────────────────────────────────────────────┘
                               ║
   ┌───────────────────────────────────────────────────────────┐
   │ Transfer character's GB code (Unicode) to ZGX code number   │
   └───────────────────────────────────────────────────────────┘
                               ║
   ┌───────────────────────────────────────────────────────────┐
   │ Look up the reference for ZGX code number, get the          │
   │ character data pointer, and read amount of components       │
   └───────────────────────────────────────────────────────────┘
                               ║
                        ◇ Repeat ◇
                               ║
   ┌───────────────────────────────────────────────────────────┐
   │ Read the component data (strokes amount of component,       │
   │ component number, position, scaling coefficients, thickness)│
   └───────────────────────────────────────────────────────────┘
                               ║
   ┌───────────────────────────────────────────────────────────┐
   │ Read the amount of component's strokes                      │
   └───────────────────────────────────────────────────────────┘
                               ║
                        ◇ Repeat ◇
                               ║
   ┌───────────────────────────────────────────────────────────┐
   │ Read the stroke data (stroke number、thickness、position、    │
   │ scaling coefficients、curvature), and convert to target      │
   │ coordinates                                                 │
   └───────────────────────────────────────────────────────────┘
                               ║
   ┌───────────────────────────────────────────────────────────┐
   │ Call stroke rendering program                               │
   └───────────────────────────────────────────────────────────┘
                               ║
          ┌───────────────────────────────┐  N
          │ Have all strokes been rendered?│
          └───────────────────────────────┘
                               ║
          ┌───────────────────────────────┐  N
          │ Were all component rendered?   │
          └───────────────────────────────┘
                               ║ Y
                        ┌──────────────┐
                        │    Return    │
                        └──────────────┘
```

Fig.1

15

```
                        ┌───────────────┐
                        │     Start     │
                        └───────┬───────┘
                                ↓
        ┌───────────────────────────────────────────────┐
        │      Read bitmap font library file to memory   │
        └───────────────────────┬───────────────────────┘
                                ↓
        ┌───────────────────────────────────────────────┐
        │      Read outline font library file to memory  │
        └───────────────────────┬───────────────────────┘
                                ↓
        ┌───────────────────────────────────────────────┐
        │   Read outline Song font library file to memory│
        └───────────────────────┬───────────────────────┘
                                ↓
        ┌───────────────────────────────────────────────┐
        │  Read outline black font library file to memory│
        └───────────────────────┬───────────────────────┘
                                ↓
        ┌───────────────────────────────────────────────┐
        │ Read outline Fangsong font library file to memory│
        └───────────────────────┬───────────────────────┘
                                ↓
        ┌───────────────────────────────────────────────┐
        │   Read outline Kai font library file to memory │
        └───────────────────────┬───────────────────────┘
                                ↓
        ┌───────────────────────────────────────────────┐
        │ Set Song font character pointer, component     │
        │        pointer, stroke pointer                 │
        └───────────────────────┬───────────────────────┘
                                ↓
        ┌───────────────────────────────────────────────┐
        │ Set black font character pointer, component    │
        │        pointer, stroke pointer                 │
        └───────────────────────┬───────────────────────┘
                                ↓
        ┌───────────────────────────────────────────────┐
        │ Set Fangsong font character pointer, component │
        │        pointer, stroke pointer                 │
        └───────────────────────┬───────────────────────┘
                                ↓
        ┌───────────────────────────────────────────────┐
        │ Set Kai font character pointer, component      │
        │        pointer, stroke pointer                 │
        └───────────────────────┬───────────────────────┘
                                ↓
        ┌───────────────────────────────────────────────┐
        │      Set bitmap font character pointer         │
        └───────────────────────┬───────────────────────┘
                                ↓
                        ┌───────────────┐
                        │    Return     │
                        └───────────────┘
```

Fig2

16

Start

If (first byte>0x1f && first byte<= 0x80)
ZGX code number = first byte - 0x1f

ch0 = first byte, ch1 = second byte;
If (ch0>=0xb0 && ch0<=0xf7 && ch1>0xa0 && ch1<0xff)
ZGX code number = 94 * (ch0-0xb0) +ch1-160

If (ch0>=0x81 && ch0<=0xaa&&ch1>=0x40&&ch1<=0xfe)
ZGX code number = 6769+190*(ch0-0x81)+ch1-0x40

If (ch0>=0xaa && ch0<=0xfe && ch1>=0xa0 && ch1<=0xfe)
ZGX code number = 12849+96*(ch0-0xaa)+ch1-0x40

If (ch0>=0xa1 && ch0<=0xa9 && ch1>=0xa1 && ch1<=0xfe)
ZGX code number = 98+94*(ch0-0xa1)+ch1-0xa1

If (ch0>=0xa8 && ch0<=0xa9 && ch1>=0x40 && ch1<=0xa0)
ZGX code number = 944+96*(ch0-0xa8)+ch1-0x40

If character is GB 4 byte character, 21009<= ZGX number<=27590

Return

Fig3

Start

Get character parameter pointer, and its strokes amount

Repeat

Get stroke parameter（stroke number, thickness, position, scaling coefficients, curvature）, and convert to target coordinates

Call stroke rendering program

Were all strokes rendered

N

Y

Exit

Fig4

```
                          ┌─────────────┐
                          │    Start    │
                          └──────┬──────┘
                                 ▼
   ┌──────────────────────────────────────────────────────────────────┐
   │ Get stroke pointer, curvature-change-number and curvature-change-mode │
   └──────────────────────────────────┬───────────────────────────────┘
                                       ▼
   ┌──────────────────────────────────────────────────────────────────┐
   │ Draw stroke centerline (controlled with head, corner, tail position) │
   └──────────────────────────────────┬───────────────────────────────┘
                                       ▼
   ┌──────────────────────────────────────────────────────────────────┐
   │ Process head and tail curvature according to curvature-change mode │
   └──────────────────────────────────┬───────────────────────────────┘
                                       ▼
   ┌──────────────────────────────────────────────────────────────────┐
   │ Draw a normal segment, if it's a line, call line function; else call Bezier │
   │                            function                                 │
   └──────────────────────────────────┬───────────────────────────────┘
                                       ▼
                         ◇─────────────────────◇
                   N     ◇     End? (Y/N)      ◇
                         ◇─────────────────────◇
                                  │ Y
                                  ▼
   ┌──────────────────────────────────────────────────────────────────┐
   │ If (the tail segment draw mode = 0) Call line function             │
   │              Else call Bezier function                            │
   └──────────────────────────────────┬───────────────────────────────┘
                                       ▼
   ┌──────────────────────────────────────────────────────────────────┐
   │ Get segment control word and head, corner, tail position          │
   └──────────────────────────────────┬───────────────────────────────┘
                                       ▼
   ┌──────────────────────────────────────────────────────────────────┐
   │                        Draw curves                                 │
   └──────────────────────────────────────────────────────────────────┘
```

19

Draw outline: get 1st edge control word, 1st edge start point position and 2nd edge position

End? (Y/N)

N

Draw a normal outline curve

Set 2nd outline curve flag

Is 2nd outline curve end?

Y

N

Draw curve head, corner, tail according to curve drawing mode

Get other outline curve pointer position

Exit

Fig.5

Start

Form a triangle with $(x_1, y_1)$, $(x_3, y_3)$ on the
curve and $(x_2, y_2)$ outside the curve

Calculate barycenter of the triangle, and separate
the triangle into2 triangle

Calculate triangles' position, and call this Bezier
function twice

N     Is side length shorter than
certain length? (Y/N)

Draw lines

Return

**Fig.6**

Start

Input data: number of points, points' positions,
and control point's position

Draw (points number–1)/2 Bezier curves: call
Bezier function

Return

**Fig.7**

Fig.8

Fig.9

```
                    ┌──────────────┐
                    │    Start     │
                    └──────┬───────┘
                           │
   ┌───────────────────────▼────────────────────────────────┐
   │ Input the start and end position of line: ( x₁,y₁ )、( x₂,y₂ ) │
   └───────────────────────┬────────────────────────────────┘
                           │
   ┌───────────────────────▼────────────────────────────────┐
   │ Calculate x direction and y direction increment: dx=x₂-x₁,dy=y₂-y₁ │
   └───────────────────────┬────────────────────────────────┘
                           │
   ┌───────────────────────▼────────────────────────────────┐
   │ Set x direction increment flag incx: if (dx>0) incx=1;  │
   │      else if (dx==0) incx=0; else incx=-1;              │
   └───────────────────────┬────────────────────────────────┘
                           │
   ┌───────────────────────▼────────────────────────────────┐
   │ Set x direction increment flag incy: if (dy>0) incy=1;  │
   │      else if (dy==0) incy=0; else incy=-1;              │
   └───────────────────────┬────────────────────────────────┘
                           │
   ┌───────────────────────▼────────────────────────────────┐
   │ Calculate loop times dis: set dx=abs(dx), dy=abs(dy);   │
   │  If (dx>dy) dis=dx; else dis=dy; set xerr=0, yerr=0      │
   └───────────────────────┬────────────────────────────────┘
                           │
   ┌───────────────────────▼────────────────────────────────┐
   │              Loop (0 ~ dis + 1)                         │
   └───────────────────────┬────────────────────────────────┘
                           │
   ┌───────────────────────▼────────────────────────────────┐
   │ Call point function to draw point ( x₁,y₁ ), xerr+=dx; yerr+=dy; │
   │                                                        │
   │    If (xerr>dis) {xerr-=dis;  x₁+=incx;}                │
   │                                                        │
   │    If (yerr>dis) {yerr-=dis;  y₁+=incy;}                │
   └───────────────────────┬────────────────────────────────┘
                           │
          N         ┌──────▼───────┐
        ◄───────────│ Loop end? (Y/N) │
                    └──────┬───────┘
                           │ Y
                    ┌──────▼───────┐
                    │   Return     │
                    └──────────────┘
```

Fig.10

Start

Input data: point coordinate （x,y）

x = x + character width / 2; y = y + character length / 2;
point addr: buffer head addr + y*character width + x;
set color to foreground color

Return

Fig.11

Start

Input data: array of polygon vertexes, and number of polygon vertexes

Set up edge table （ET） : call sub function

Scan ET by y coordinates. If current item in ET is not NULL, call sub
function to insert all current edges into AEL table and sort ascending
by cxBottom

Delete edges whose cyMax (maximum of y coordinate) in AEL table
has reach current y coordinate

Draw lines

N

y coordinate reaches max

Y

Return

Fig.12

```
                    ╱────────────────╲
                    ⟨     Start      ⟩
                    ╲────────────────╱
                            ⇓
    ┌──────────────────────────────────────────────────┐
    │  Input data: array of polygon vertexes and vertexes number │
    └──────────────────────────────────────────────────┘
                            ⇓
    ┌──────────────────────────────────────────────────┐
    │  Find minimum and maximum coordinate of vertex y   │
    │  coordinate, and set cyMin and cyMax in ET         │
    └──────────────────────────────────────────────────┘
                            ⇓
    ┌──────────────────────────────────────────────────┐
    │  Record number of scanning lines in y direction and set in ET │
    └──────────────────────────────────────────────────┘
                            ⇓
    ┌──────────────────────────────────────────────────┐
    │              Insert all edges to ET                │
    │                 Loop by vertex                     │
    └──────────────────────────────────────────────────┘
                            ⇓
    ┌──────────────────────────────────────────────────┐
    │  Only process lines which are not parallel to x direction: cy1 = │
    │       cyMax; cy0 = cyMin; cx0 = cxMin              │
    └──────────────────────────────────────────────────┘
                            ⇓
    ┌──────────────────────────────────────────────────┐
    │  Allocate memory for new edge, point to the new edge │
    └──────────────────────────────────────────────────┘
                            ⇓
          N          ╱──────────────────╲
                    ⟨   Loop end? (Y/N)  ⟩
                     ╲──────────────────╱
                            ⇓  Y
                    ╭────────────────╮
                    │     Return     │
                    ╰────────────────╯
```

Fig.13

Start

Input parameter: ET, current scan line (y coordinate), and
pointer of AEL table

Save current AEL pointer, previous edge pointer of
pCurTable, pointer of current operated edge in ET

Do until arrive the end of ET

Is AEL empty? (Y/N)

N

Create AEL, point to pCurEdgeInET

Y

ET end? (Y/N)

N

Return

Y

Insert to linked list, and sort the list

Fig.14

n: stroke amount

```
              ┌─────────────────────────┐
              │      n (2bytes)          │         ┌─────────────────────────────┐
              ├─────────────────────────┤         │ Stroke position (3bytes) │─────▶ Index offset
              │  1st stroke (4bytes) ────┼───────▶ ├─────────────────────────────┤
              │  2nd stroke (4bytes)     │         │ Curvature mode (4bits)   │
┌───────────┐ ├─────────────────────────┤         ├─────────────────────────────┤
│           │ │         ...              │         │ Segment number (4bits)   │
│  Index    │─┤                          │         └─────────────────────────────┘
│  n*4+2    │ │  nth stroke (4bytes)     │
│           │ └─────────────────────────┘
├───────────┤
│           │ ┌──────────────────────────────┐
│Stroke data│─▶│ 1st stroke data (indefinite) │
│           │ ├──────────────────────────────┤
└───────────┘ │ 2nd stroke data (indefinite) │
              ├──────────────────────────────┤
              │ 3rd stroke data (indefinite) │
              ├──────────────────────────────┤
              │           ...                │
              ├──────────────────────────────┤
              │ nth stroke data(indefinite)  │
              └──────────────────────────────┘
```

Fig.15

```
┌───────────────────────────┐          ┌───────────────────────────┐
│ Stroke centerline data    │─────────▶│  Stroke outline data      │
└───────────────────────────┘          └───────────────────────────┘
```

Fig.16

```
  7       6       5       4       3       2       1       0
┌───────┬───────┬───────┬───────┬───────┬───────┬───────┬───────┐
│       │       │       │       │       │       │       │       │
└───────┴───────┴───────┴───────┴───────┴───┬───┴───────┴───────┘
                                            │        \       /
                                            ▼         \     /
                                   Segment flag: z12   Draw mode: z00
                                   0: normal segment   00: line
                                   1: tail segment     01: 1 curve
                                                       11: 2 curves
```

Fig.17

27

| 7 | 6 | 5 | 4 | 3 | 2 | 1 | 0 |
|---|---|---|---|---|---|---|---|
|   |   |   |   |   |   |   |   |

Number of special
segment points: tqy

Segment flag: z12
0: normal segment
1: tail segment

Draw mode: z00
00: line
01: 1 curve

**Fig.18**

n: Most amount of
component's strokes

Index
(n+1)*4 bytes

Component data

| n (4bytes) |
|---|
| Position of 1-stroke component (4bytes) |
| Position of 2-stroke component (4bytes) |
| ...... |
| Position of n-stroke component (4bytes) |

Index offset

| No.1 2-ST (2*8byte) |
|---|
| No.2 2-ST (2*8byte) |
| ... |
| No.1 3-ST (3*8byte) |
| ... |
| ... |
| No.1 n-ST (n*8byte) |
| ... |

2-ST

3-ST

n-ST

m-stroke component (m-ST)

| Stroke 1 (8 bytes) |
|---|
| Stroke 2 (8 bytes) |
| ... |
| Stroke m (8 bytes) |

| Stroke Number (2 bytes) |
|---|
| Thickness (1 byte) |
| X coordinate (1 byte) |
| Y coordinate (1 byte) |
| X scaling coefficient (6bits) |
| Y scaling coefficient (6bits) |
| X curvature change (6 bits) |
| Y curvature change (6 bits) |

**Fig.19**

28

Fig.20

Fig.21

Fig.22

Fig.23

Fig.24

n: stroke amount

| n (2bytes) |
| 1st stroke (4bytes) |
| 2nd stroke (4bytes) |
| ... |
| nth stroke (4bytes) |

| Stroke position (3bytes) |
| Curvature mode (4bits) |
| Segment number (4bits) |

Index offset

Index
n*4+2

Stroke data

| 1st stroke data (indefinite) |
| 2nd stroke data (indefinite) |
| 3rd stroke data (indefinite) |
| ... |
| nth stroke data(indefinite) |

Fig.25

| n (4 bytes) |
| 1st char index (4) |
| 2nd char index (4) |
| ... |
| nth char index(4) |

| Char position (3 bytes) |
| Amount of character's component (1byte) |

Index offset

Character index
(n+1)*4 bytes
n: character amount

Character
parameter

| Char 1 (Component amount*4bytes) |
| Char 2 (Component amount*4bytes) |
| ... |
| Char n (Component amount*4bytes) |

m-component character (m<=5)

| Component 1 (4bytes) |
| Component 2 (4bytes) |
| ... |
| Component m (4bytes) |

| X coordinate (1 byte) |
| Y coordinate (1 byte) |
| X scaling (6 bits) |
| Y scaling (6 bits) |
| Thickness (4 bits) |

Fig.26

31

n: Most amount of
component's strokes

Index
(n+1)*4 bytes

Component data

| n (4bytes) |
| Position of 1-stroke component (4bytes) |
| Position of 2-stroke component (4bytes) |
| ...... |
| Position of n-stroke component (4bytes) |

} Index offset

m-stroke component (m-ST)

| No.1 2-ST (2*6byte) |
| No.2 2-ST (2*6byte) |
| ... |
| No.1 3-ST (3*6byte) |
| ... |
| ... |
| No.1 n-ST (n*6byte) |
| ... |

2-ST

3-ST

n-ST

| Stroke 1 (6 bytes) |
| Stroke 2 (6 bytes) |
| ... |
| Stroke m (6 bytes) |

| Thickness (1 byte) |
| X coordinate (1 byte) |
| Y coordinate (1 byte) |
| X scaling coefficient (6bits) |
| Y scaling coefficient (6bits) |
| X curvature change (6 bits) |
| Y curvature change (6 bits) |

**Fig.27**

n: stroke amount

Index
n*4+2

Stroke data

| n (2bytes) |
| 1st stroke (4bytes) |
| 2nd stroke (4bytes) |
| ... |
| nth stroke (4bytes) |

| Stroke position (3bytes) |
| Curvature mode (4bits) |
| Segment number (4bits) |

Index offset

| 1st stroke data (indefinite) |
| 2nd stroke data (indefinite) |
| 3rd stroke data (indefinite) |
| ... |
| nth stroke data(indefinite) |

**Fig.28**

(0.0)                           $x$

$y$

(639,479)

**Fig.29**

(0,0)                           $x$

$x_1$

$y$

$y_1$

$o_1 \ (x_0, y_0)$

**Fig.30**

33

$o_2(x_{10}, y_{10})$

$x_2$

$x_1$

$o_1$

$y_2$

$y_1$

Fig.31

$O_2$

$x_2$

$O_3$

$x_3$

$(x_{20}, y_{20})$

$y_2$

$y_3$

Fig.32

# PATENT COOPERATION TREATY

# PCT

## DECLARATION OF NON—ESTABLISHMENT OF INTERNATIONAL SEARCH REPORT

### (PCT Article 17(2)(a),Rules 13 *ter.*1(c) and 39 )

| Applicant's agent's reference<br>IP03009 | **IMPORTANT DECLARATION** | Date of mailing *(day/month/year)*<br>**1 0 JUL 2003 (1 0. 0 7. 0 3)** |
|---|---|---|
| International application No.<br>PCT/CN03/00230 | International filing date *(day/month/year)*<br>28.Mar 2003 （28.03.03） | (Earliest)Priority date*(day/month/year)*<br>29.Mar 2002 （29.03.02） |
| International Patent Classification (IPC) or both national classification and IPC<br>G06F 3/14 | | |
| Applicant<br>ENMEDIA SYSTEM CORP. etc | | |

This International Searching Authority hereby declares, according to Article 17(2)(a), that **no international search report will be established** on the international application for the reasons indicated below.

1. ☒ The subject matter of the international application relates to:
    - a. ☐ scientific theories.
    - b. ☐ mathematical theories.
    - c. ☐ plant varieties.
    - d. ☐ animal varieties.
    - e. ☐ essentially biological processes for the production of plants and animals, other than microbiological processes and the products of such processes.
    - f. ☐ schemes, rules or methods of doing business.
    - g. ☒ schemes, rules or methods of performing purely mental acts.
    - h. ☐ schemes, rules or methods of playing games.
    - i. ☐ methods for treament of the human body by surgery or therapy.
    - j. ☐ methods for tratment of the animal body by surgery or theraly.
    - k. ☐ diagnostic methods practised on the human or animal body.
    - l. ☐ mere presentations of information.
    - m. ☐ computer programs for which this International Searching Authority is not equipped to search prior art.

2. ☐ The failure of the following parts of the international application to comply with prescribed requiremrnts prevents a meaningful search from being carried out:
    - ☐ the description
    - ☐ the claims
    - ☐ the drawings

3. ☐ The failure of the nucleotide and/or amino acid sequence listing to comply with the standard provided for in Annex C of the Administrative Instructions prevents a meaningful search from being carried out:
    - ☐ the written form has not been furnished or does not comply with the standard.
    - ☐ the computer readable form has not been furnished or does not comply with the standard.

4. Further comments:

The present invention relates to a kind of Embedded Curve Chinese Character Library Described Based On Stroke Central Line which belongs to maninduced definition, so it's subject matter belongs to rules or methods of performing purely mental acts, therefore according to Article 17(2)(a) no international search report is established.

| Name and mailing address of the ISA/CN<br>**6 Xitucheng Rd., Jimen Bridge, Haidian District,**<br>**100088 Beijing, China**<br>Facsimile No. **86-1062019451** | Authorized office<br><br>Telephone No. 86-10-62093475 |
|---|---|

Form PCT/ISA/203(July 1998)